# EUROPEAN PATENT APPLICATION

(11) **EP 0 987 641 A2**
(43) Date of publication of application: **22.03.2000**
(21) Application number: 99116221.5
(22) Date of filing: 17.08.1999
(51) Int. Cl.: G06F 17/60

(54) **Information processing device and storage medium with a reply-preparing program readable by a computer**

(30) Priority: 14.09.1998 JP 25981398
(71) Applicant: SHARP KABUSHIKI KAISHA, Osaka 545 (JP)
(72) Inventor: Takeuchi, Masato, Nara-shi, Nara (JP); Shiraishi, Naoki, Yamatokoriyama-shi, Nara (JP); Kaneda, Toshitaka, Kashihara-shi, Nara (JP)
(74) Representative: MÜLLER & HOFFMANN Patentanwälte

(57) **Abstract**

A primary object of the present invention is to provide an information processing device capable of easily preparing reply mail at the receiving side and does not requires complicated processing at the transmitting side. An information processing device that enables a user to prepare a reply to a received letter by selecting answer-requesting contents from the received mail stored in the received-mail contents storage portion (113) of a RAM (11) and by selecting suitable answers from a candidate answer list stored in a candidate-answer memory (115) of the RAM (11), wherein a central control portion (8) then prepares the reply mail by combining the selected contents with the selected corresponding answers and stores the reply mail in the reply contents memory (118) of the RAM (11).

## Description

### BACKGROUND OF THE INVENTION

The present invention relates to an information processing device for transmitting and receiving electronic mail and more particularly to an information processing device being capable of easily preparing reply mail necessary for answering received electronic mail.

Japanese Laid-open Patent Publication No. 10-27141 discloses an electronic mail system that enables a receiver of electronic mail to prepare reply mail by easy operation.

This electronic mail system includes means to put a mark code on each of answer-requesting items in a text of electronic mail to be transmitted and add a list of answer candidates, means to add control information for the mark code and the candidate-answer list to control information of the mail to be transmitted, means to select a reply message from the candidate answers when preparing reply mail and means to automatically generate reply mail from the received mail and a selected answer message. In this system, a user-sender of an electronic mail can prepare and send electronic mail by preparing control information, mark codes and lists of candidate answers and a user-receiver of transmitted electronic mail prepared by the same manner as mentioned above is requested only selecting one of the candidate-answers of each list when preparing a reply to the received mail. The system can automatically generate a reply letter by coupling the received mail items with the answers selected by the user and transmit the generated reply.

Namely, besides usual information such as mail addresses and a formal set of expression, the system also stores therein additional control information to be added to answer-requesting electronic mail such as (1) an instruction of whether mark code is indicated when displaying received mail, (2) an instruction of whether a list of candidate answers is indicated when displaying received mail and (3) a list of standard candidate answers for use in absence of a candidate-answer list in received mail.

In other words, the system receives an answer-requesting letter, searches a mark code put on each answer-requesting item in the received mail and displays an added list of candidate answers, requesting the user of selecting an answer therefrom. Upon receipt of the user's selection, the system automatically generates a reply and sends it to the sender of the received letter.

The above-described prior art, however, involves such a problem that a user-receiver has to prepare a reply without utilizing the function of the art if he or she did not know the method of processing mark codes in the received letter.

Furthermore, the user-receiver cannot choice a different answer other than those contained in a list specified by the sender of the received mail. In other words, if the receiver wishes to reserve an answer or make a different answer to the received mail, he or she has to prepare a reply without using the function provided by the art. In this instance, the receiver must refer the subject of the received mail and write an answer to it. Namely, the prior art cannot afford the receiver (i.e., the sender of a reply to the received mail) a freedom enough to accurately express his or her will.

It must be also noticed that the prior art enables the receiver to easily prepare a reply but forces the sender to do complicated processing in preparing mail to be transmitted and answered by the receiver. In view of total processing time of both parties, the prior art is not so advantageous. Simplified preparation of a reply is realized by laborious preparation of answer-requiring mail by the sender as compared with usual method. Thus, the merit of the art at the receiver side is canceled by the demerit at the sender side.

In view of the foregoing problems involved in the prior art devices, the present invention was made to provide an information processing device that enables a user to easily prepare reply mail, not requiring a user-sender to do complicated processing in preparing mail to be answered.

### SUMMARY OF THE INVENTION

An object of the present invention is to provide an information processing device that is provided with a memory means for storing examples of answer messages, a contents selecting means for viewing a contents of received mail and picking therefrom items necessary for preparing a reply to the received mail, an answer-message selecting means for selecting any of the answer-examples stored by the memory means and a reply mail preparing means for preparing a reply mail by coupling in pairs the items selected by the contents selecting means with the corresponding answer-messages selected by the answer-message selecting means.

Another object of the present invention is to provide an information processing device that is further provided with a reply-mail setting means for setting a sender of the transmitted (received) mail as an addressee of the reply and a receiver of the transmitted (received) mail as an addresser of the reply.

Another object of the present invention is to provide an information processing device that is further provided with an answer-example preparing means for generating any kinds of answer-message examples and an example-adding means for additionally storing the examples prepared by the answer-example preparing means into the memory means.

A further object of the present invention is to provide a storage medium carrying a program readable by a computer, which program causes the computer to execute steps of storing necessary items picked from received mail into a reply contents storage means, presenting candidates answer-messages previously stored in a candidate-answer storage means, storing any one selected from the presented candidates into a answer storage means and preparing reply mail by coupling the items stored in the reply contents storage means with the answer messages stored in the answer storage means and storing the prepared reply mail in a reply mail storage means.

Another object of the present invention is to provide a storage medium carrying a program readable by a computer, which program causes the computer to execute steps of storing necessary items picked from received mail into a reply contents storage means, presenting candidates answer-messages previously stored in a reply candidate storage means, storing any one selected from presented candidates into an answer message storage means, preparing reply mail by coupling the items stored in the reply contents storage means with the answer messages stored in the answer storage means and storing the prepared reply mail in a reply-mail storage means, and setting a sender of the transmitted (received) mail as an addressee of a reply and a receiver of the transmitted (received) mail as an addresser of the reply.

### BRIEF DESCRIPTION OF THE DRAWINGS

Fig. 1 is a block diagram of an electronic mail system of an information processing device embodying the present invention.
Fig. 2 is a block diagram showing a practical construction of a central control unit.
Fig. 3 is an external view of an electronic mail system that is an information processing device according to the present invention.
Fig. 4 is an exploded perspective view of an input/output portion shown in Fig. 3.
Fig. 5 is illustrative of an exemplified menu screen of an electronic mail application.
Fig. 6 shows an exemplified screen image when preparing reply mail.
Fig. 7 shows an exemplified screen image when preparing reply mail.
Fig. 8 shows an exemplified screen image when preparing reply mail.
Fig. 9 shows an exemplified screen image when preparing reply mail.
Fig. 10 shows an exemplified screen image when preparing reply mail.
Fig. 11 shows an exemplified screen image when preparing reply mail.
Fig. 12 shows an exemplified screen image when registering an answer example for preparing reply mail.
Fig. 13 shows an exemplified screen image when registering an answer example for preparing reply mail.
Fig. 14 shows an exemplified screen image when registering an answer example for preparing reply mail.
Fig. 15 shows an exemplified screen image when registering an answer example for preparing reply mail.
Fig. 16 is a flowchart depicting the processing on a menu screen of an electronic mail application.
Fig. 17 shows the correct alignment of the drawing sheets for Figs. 17A and 17B.
Figs. 17A and 17B are flowcharts depicting the processing procedure of preparing reply mail using received mail.
Fig. 18 shows the correct alignment of the drawing sheets for Figs. 18A and 18B.
Figs. 18A and 18B are flowcharts depicting the reply mail processing.
Fig. 19 shows the correct alignment of the drawing sheets for Figs. 19A and 19B.
Figs. 19A and 19B are flowcharts depicting the procedure of registering a reply example.

### PREFERRED EMBODIMENTS OF THE INVENTION

An embodiment of the present invention will be described below with reference to accompanying drawings.

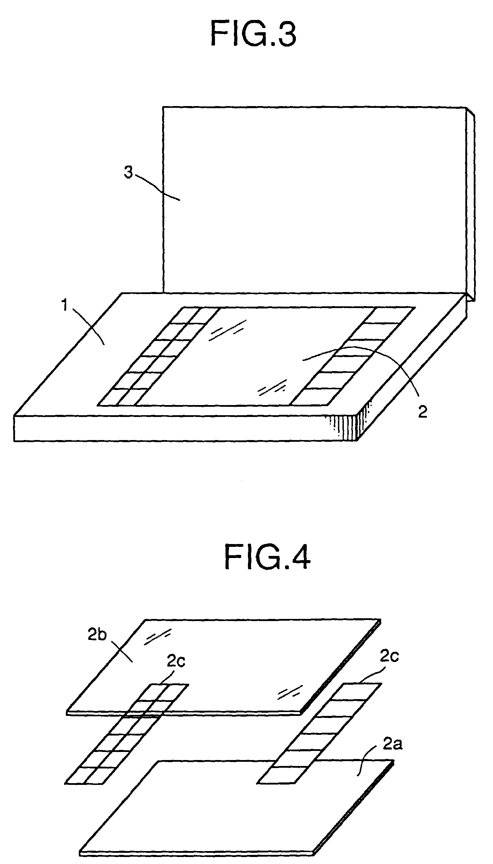

Fig. 3 is an external view of an electronic mail system that is an information processing device embodying the present invention. This electronic mail system is composed of a main body cabinet 1 having a pen holding portion (not shown) and a cover portion 3 jointed by hinges to the back of the cabinet 1.

The main body cabinet 1 has an input/output portion 2 being a display with an integrally attached thereto transparent tablet and includes therein an infrared transmitter, an interface control circuit and a power supply unit. The cover portion 3 can be turnably opened for use and closed to protect the input/output portion 2 during transportation.

Fig. 4 is a perspective view of the input/output portion 2 in the disassembled state. Numeral 2a designates a thin LCD display capable of displaying characters through a matrix system. The LCD portion 2a may be provided with a back light (not shown) consisting of, e.g., an electroluminescence panel and/or with a front light (not shown) consisting of, e.g., a cold cathode-ray tube.

A transparent tablet 2b is overlaid on a whole front surface of the LCD portion 2a. This transparent tablet 2b has two (not shown) transparent sheets having transparent electrodes formed each on respective inside surfaces and normally separated from each other by small protrusions formed in a regular order on the inside surface of each sheet. The transparent electrodes are contacted with each other at a place touched by a finger or a pen and a thus selected area is detected.

Two films 2c, 2c each having fixed keys printed thereon are disposed at the left side and the right side respectively between the LCD 2a and the transparent tablet 2b. The frequently usable functions are clearly indicated with illustrative symbols printed thereon.

The input/output portion 2 are so constructed that an area selected by a user on the screen image of the LCD 2a can be detected as a touched-area information from the transparent tablet 2b, which information is synchronized with a contents of the screen image.

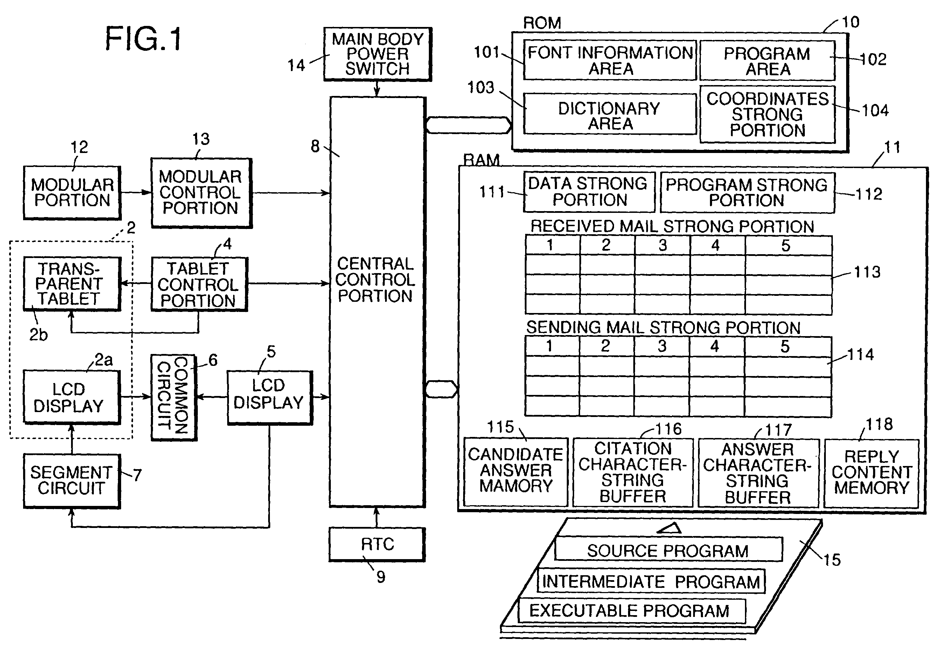

Fig. 1 is a block diagram showing a construction of an electronic mail system that is an information processing device embodying the present invention.

The electronic mail system is composed of an input/output portion 2, a tablet control portion 4, an LCD circuit 5, a common circuit 6, a segment circuit 7, a central control portion 8, an RTC (Real-Time Clock) 9, a ROM 10, a RAM 11, a modular control portion 13, a main body power switch 14 and a program medium 15.

A tablet control portion 4 is used for obtaining coordinate information from the transparent tablet 2b and connected to transparent electrodes of respective transparent sheets of the tablet 2b to detect a position touched by a finger of a user or a pen on the tablet 2b as coordinate data of a contact formed by two transparent electrodes.

The LCD circuit 5 has a memory of a bit map corresponding to LCD dots-positions to be lighten. It transmits signals, as necessary, to the common circuit 6 and the segment circuit 7.

The central control portion 8 can control a variety of input information and/or output information according to given instructions. The RTC 9 measures real time based on clock signals from an oscillator (not shown) and outputs current time of current date (year, month, day).

An ROM (Read Only Memory) 10 has a font-information area 101 storing character fonts to be displayed on the LCD 2a, a program area 102 storing a program describing actions of the central control portion 8, a dictionary for converting signals to characters, a coordinates storage area 104 storing conversion information for converting coordinate data detected by the tablet control portion 4 to coordinate corresponding to a display position.

The RAM (Random Access Memory) 11 has a data storage portion 111 for storing a variety of data such as sentences and figures input by a user through the input/output portion 2, a program storage portion 112 for storing a program of the program medium 15 when installing the program media in the main body by using a not-shown program loading means, a received mail storage portion 113 for storing received mail information, a transmitted-mail storage portion 114 for storing transmitted-mail information, a candidate-answer memory 115 for storing candidate answer-examples to be used when preparing reply mail, a citation character-string buffer 116 for storing a cited sentences to be used when preparing reply mail, an answer character-string buffer 117 for storing an answer message selected from the candidates and a reply contents memory 118 for storing data such as sentences cited in reply mail.

The received-mail storage portion 113 consists of a received-mail-title area 1131, a sender-address area 1132, a receiver-address area 1133, a received-date area 1134 and a received-mail-contents area 1135. The transmitted-mail storage portion 114 consists of a transmitted-mail-title area 1141, a sender-address area 1142, a receiver-address area 1143, a transmitted-date area 1144 and a transmitted mail contents area 1145. The above numeral suffixes of the areas (e.g., 1 in 1131 of the received mail title and 1 in 1141 of the transmitted mail title) corresponds to numerals shown in the uppermost row of the respective received mail and transmitted-mail storage portions 113 and 114 of the RAM 11.

The modular portion 12 connected to a transmission line is used for controlling transmission/receipt of electronic mail and input/output of data from/to Internet side through the modular control portion 13.

The main body power switch 14 is used for turning on and off the power supply of the main body. The program medium 15 is an information storage medium removably loaded in the main cabinet. The suitable form of the program media 15 may be, for example, a CD-ROM, a floppy disc and an IC card. This program medium 15 has therein records of an executable program to be read and executed by the main body cabinet, a source program capable of constructing an executable program and an intermediate program.

The information processing device must be loaded first with necessary programs from the program medium 15 by means of program-reading means (not shown) if no program was previously installed in the main body cabinet 1. In this instance, data read from the program medium is stored in the data storage portion 111 of the RAM 11 and program codes of the executable program are stored in the program storage portion 112 of the RAM 11.

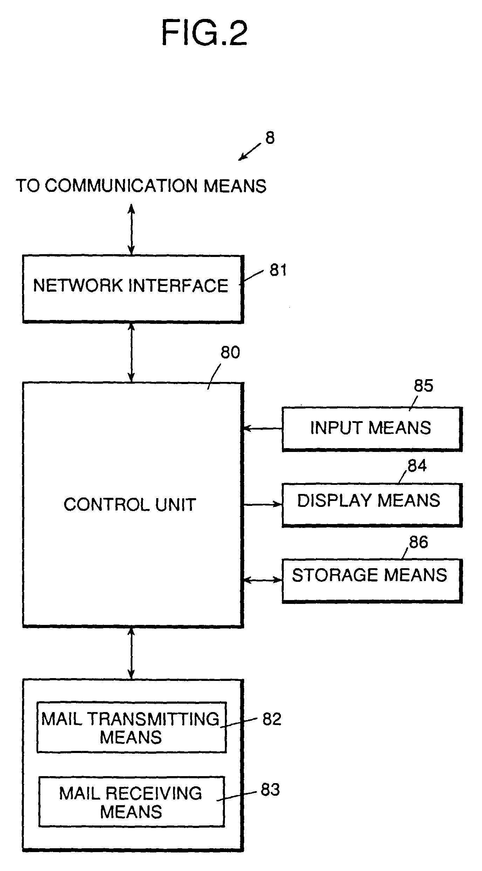

Fig. 2 illustrates the concrete construction of the central control portion 8. This portion 8 includes a network interface 81 for network communication, a mail transmitting means 82 for transmitting mail to a designated addressee and storing transmitted mail in a transmitted mail storage portion 114 of the RAM 11, a mail-receiving means 83 for receiving mail, classifies the mail by addressee and storing it in a received mail storage portion 113 of the RAM 11, a control portion 80 for controlling a whole control system composed of the ROM 10, RAM 11, and input/output control device and so on, a display means 84 for controlling the LCD circuit driving the LCD portion 2a shown in Fig. 1, an input means 85 for controlling the tablet control portion 4 of the transparent tablet 2b and a storage means 86 for storing a variety of information (e.g., received mail and transmitted mail) in the RAM 11.

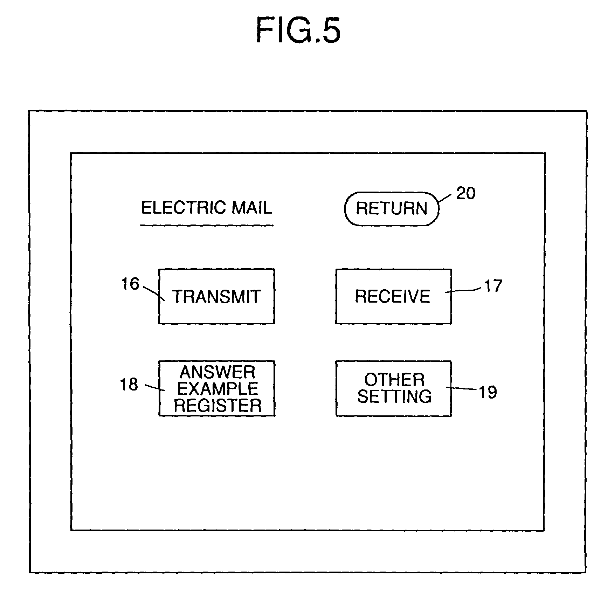

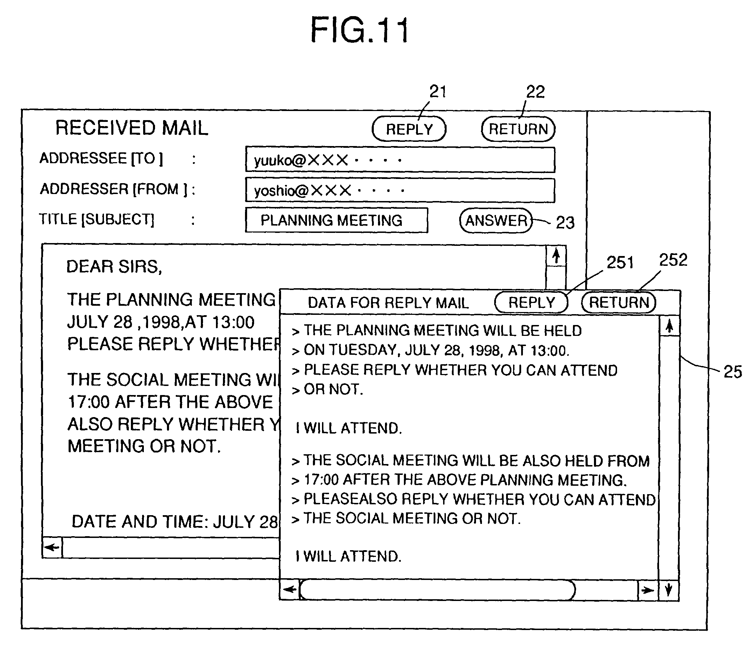

Referring to Figs. 5 to 15, the operation of the electronic mail system having the above-described construction will be described, by way of example, by using in principle a variety of display screens.

Fig. 5 shows a menu screen of an electronic mail application for transmitting and receiving electronic mail and additionally registering reply examples.

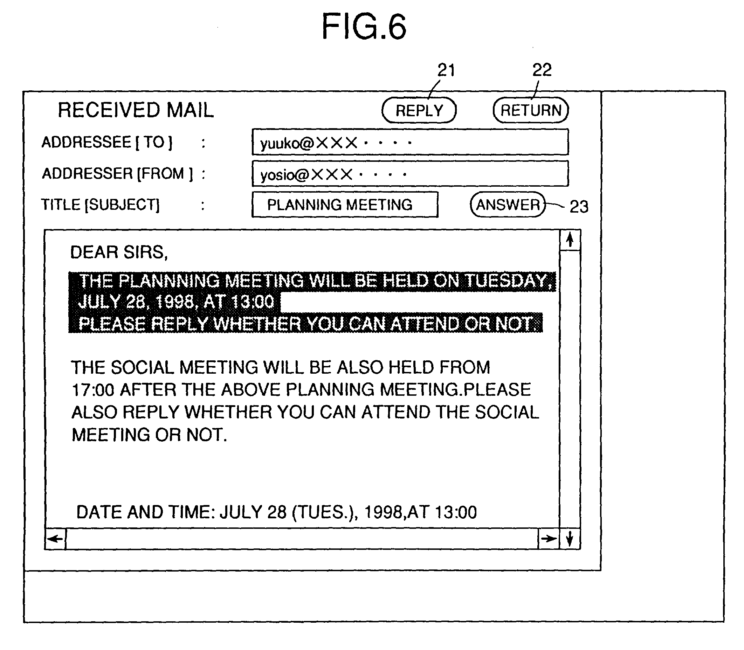

The menu screen of Fig. 5 appears on the display portion by executing the electronic mail application. When a user touched a TRANSMIT button 16 on the menu screen a transmission screen (not shown) is opened, enabling the user to transmit mail. When the user touched a RECEIVE button 17 a screen of the received mail list appears on the display. When any one of received mail in the list was designated by the user, the designated received mail is opened (as shown in Fig. 6), allowing the user to processing on the received mail, which will be described later.

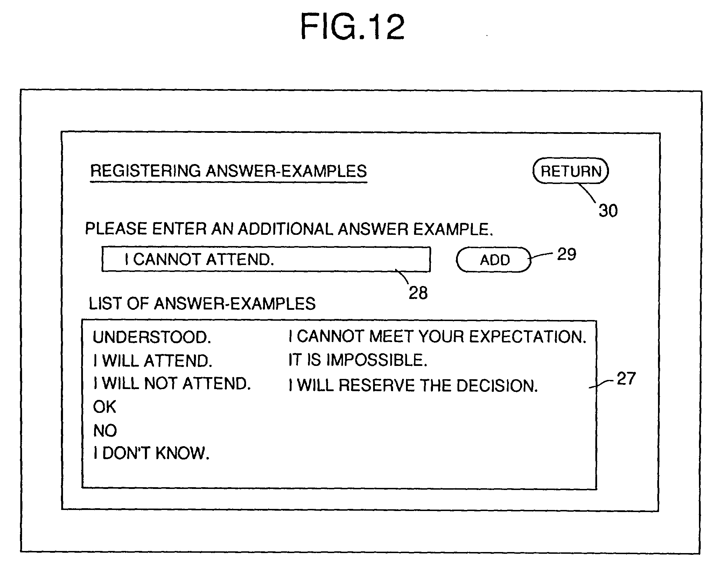

When the ANSWER EXAMPLE REGISTER button 18 was touched by the user on the menu screen of Fig. 5, an answer example registering screen of Fig. 12 is opened allowing the user to register examples of answers, which will be described later.

When a OTHER SETTING button 19 was touched by the user on the menu screen of Fig. 2, it becomes possible to set various kinds of items necessary for transmitting and receiving electronic mail. Touching a RETURN button 20 ends the electronic mail application and restores a preceding screen shown before executing the application.

Figs. 6 to 11 are display screens when preparing reply mail. When the user selected any one of the received messages in the received-mail list, the selected received mail is displayed in detail as shown in Fig. 6. The user touches a REPLY button 21 on the screen when he or she wants to make an answer to the received mail. Touching the REPLY button 21 causes the system to set a sender of the received mail as an addressee, put a reply mark on the title and put a citation mark ">" on every element of the received mail contents to convert the elements to a reply contents. Different citation marks may also be used.

In the shown embodiment, candidate answers can be displayed by selecting the contents of the received mail for use in the reply mail and touching the ANSWER button 23. After selecting a suitable answer by the user, a reply is prepared by combining the selected character strings with the selected answer and transmitted.

In practice, the user selects character strings to be used in reply mail by moving a pen along the strings on the screen. The selection of character strings may be conducted with a different pointing device such as a mouse, track ball and touch pad. The selected character strings are highlighted as shown in Fig. 6.

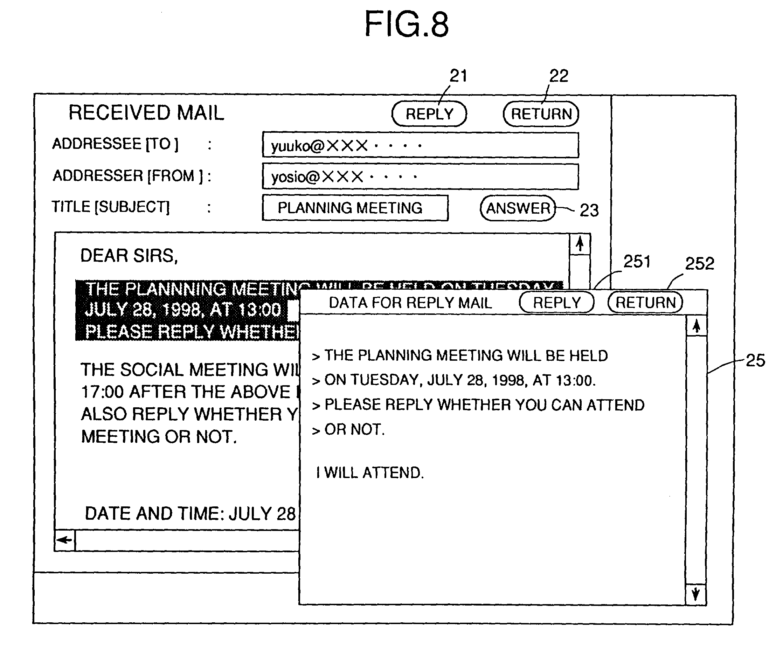

On the screen of Fig. 6, the user touches an ANSWER button 23. The button is highlighted and a candidate-answer list 24 is indicated about the selected character strings. Now, an answer, e.g., "I will attend" in the list was selected by the user, thereby a reply data preparing screen 25 is opened and the selected character strings each marked ahead with a citation mark ">" are indicated in combination with the selected answer on the screen as shown in Fig. 8.

The user touches a REPLY button 251 on the reply data preparing screen 25 of Fig. 8, thereby a contents of the screen 25 is first stored as data for a reply and then the screen 25 is closed.

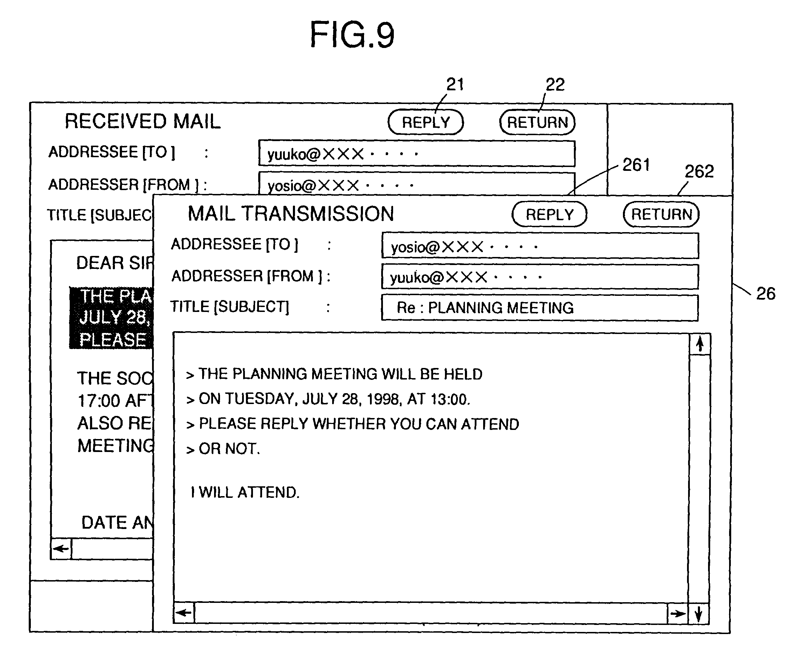

Then, a mail transmitting screen 26 is opened, wherein, as shown in Fig. 9, the received-mail sender (YosioXXXX---] is set as an addressee of a reply letter to be transmitted, the received-mail addressee [YuukoXXXX---] is set as an addresser (sender) of the reply letter to be transmitted, a reply-mark (Re:) is added to a "subject" (title) and the contents shown on the reply data preparing screen 25 is set as a reply contents data. Now, the reply mail can be sent by touching a TRANSMIT button 261 by the user.

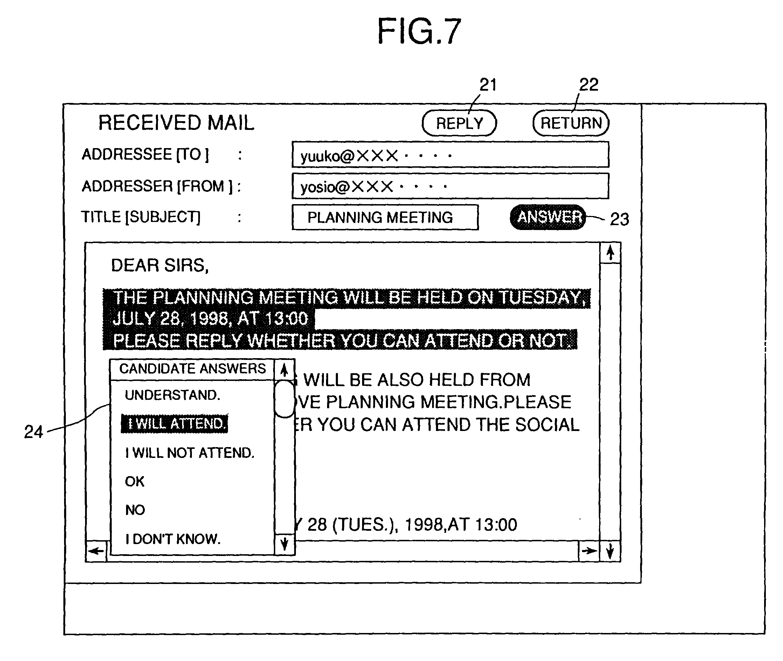

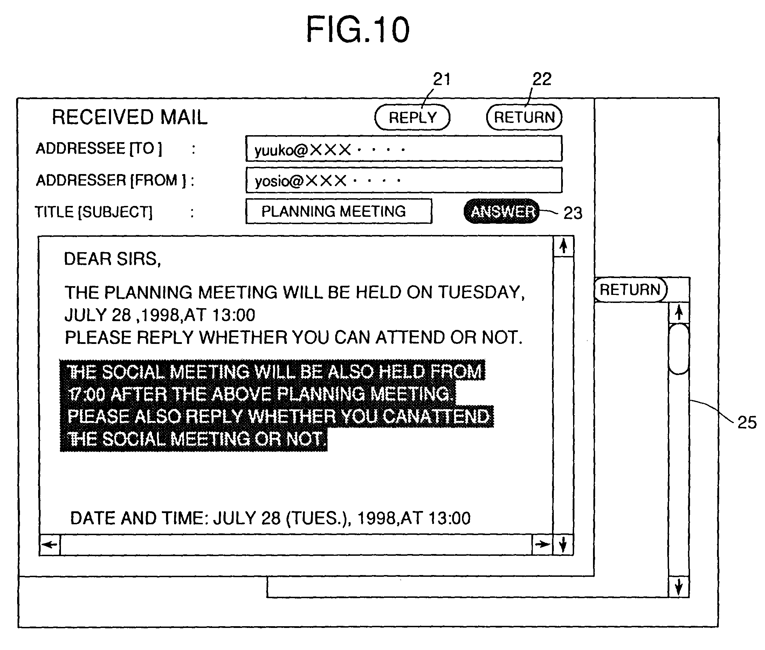

For preparing a reply containing a plurality of answers, the user has to activate again the received mail screen by touching again the screen at the stage of Fig. 8. The user selects a further answer-requesting item from the received mail (Fig. 10), indicates the candidate answer list 24 (Fig. 7) again by touching the ANSWER button 23 and selects an answer, e.g., "I will not attend" in the list. The reply data preparing screen 25 is displayed again, which screen indicates, below the previously set data, an additional combination of the selected character strings with the selected answer. Data for reply can be added by repeating the above described procedure, thus adapting for the case of being requested plural answers.

When the user touched a REPLY button 251 on the reply data preparing screen 25, a contents of the screen 25 is first stored as data for a reply and then the screen 25 is closed. Then, a mail transmitting screen 26 is opened, wherein, as described above, the received mail sender [YosioXXXX---] is set as an addressee of a reply letter to be transmitted, the received mail addressee (YuukoXXXX---] is set as an addresser (sender) of the reply mail to be transmitted, a reply mark (Re:) is prefixed to a "subject" (title) and the contents shown on the reply data preparing screen 25 is set as a reply contents data. The reply mail can be sent by touching a TRANSMIT button 261 by the user (see Fig. 9).

If the user touched a RETURN button 252 on the screen 25, no processing is done and the screen 25 is closed.

Figs. 12 to 15 are display screens for registering answer examples for use in preparing a reply.

When the user touched ANSWER EXAMPLE REGISTER button 18 on the electronic-mail-application menu-screen of Fig. 5, an answer example list 27 is read from the candidate answer memory 115 and an answer example registering screen of Fig. 12 is displayed on the display portion.

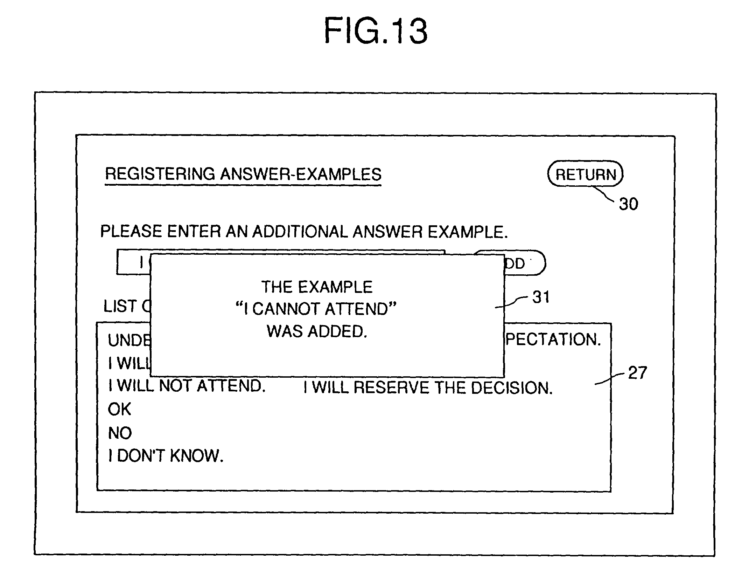

The user wrote, for example, a sentence "I cannot attend" in the answer example inputting portion 28 (Fig. 12) and touched an ADD button 29. The device stores answer-example in the candidate answer memory 115 of the RAM 11 and displays a registration confirming message 31 (e.g., "an example <I cannot attend> was added to the list" as shown in Fig. 13). After this, the confirmation message 31 is closed, the display of the answer-example inputting portion 28 is cleared, a list of candidate answers is read again from the candidate answer memory 115 of the RAM 11 and examples including the newly added example "I cannot attend" are displayed in the answer example list 27.

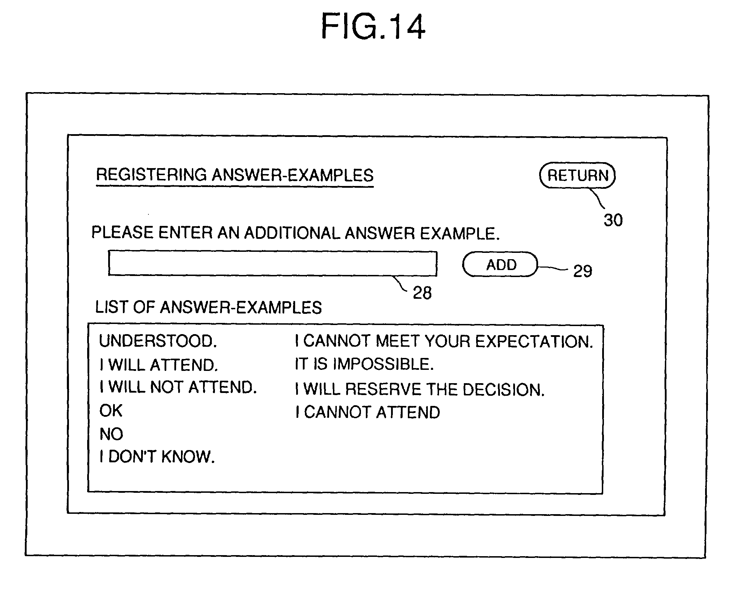

The display returns to the menu screen (Fig. 5) when a RETURN button 30 is touched on the screens of Figs. 12 and 14.

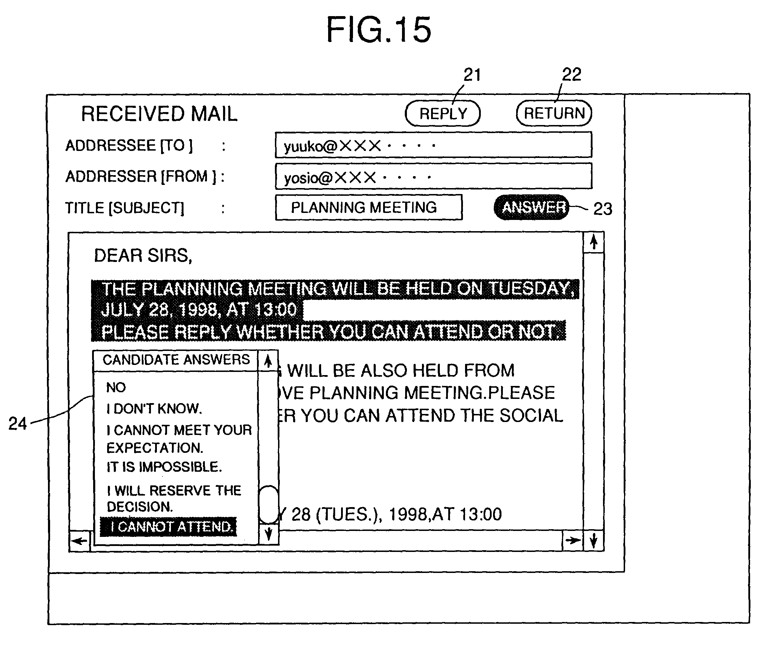

After adding an answer example, the user opens the received mail screen, selects character-strings and touches the ANSWER button 23 to display the candidate answer list 24. The added example appears on the screen as shown in Fig. 15 by moving down a scrolling bar of the list 24. Although the shown embodiment can only add the answer examples, it may be so modified that can delete and edit candidate examples on the answer example registering screen.

The operation of the electronic mail system according to the present invention has been described laying the stress on the use of screens. Now, the processing actions of the embodiment will be described below with reference to Figures 1 and 2 where the system is illustrated with the central control unit 8.

Mail transmitted from a sender (external addresser) is received by a receiver (user of the device) through the receiver-side network interface 81, classified for addressees and stored by the mail receiving means 83 in a reserved area of the storage means 86.

On a received-mail screen of Fig. 6, the user selects items to be necessarily cited in preparing a reply from the contents of the received mail and touches an ANSWER button 23 on the screen. A control portion 80 generates a control signal for causing the storage means 86 to read a list of candidate answers (examples) and a control signal for causing a display means 84 to display the candidate answer list 24 on a display screen as shown in Fig. 7.

The user selects an answer example from the list 24. The control portion 80 gives a control signal to the storage means 86 that in turn stores the selected character strings in a cited-character-string buffer 116 and the answer selected from the candidate answer memory 115 in an answer character-string buffer 117.

The control portion 80 also generates a control signal to cause the storage means 86 to open a reply data preparing screen 25 and display thereon the contents of the citation character-string buffer 116 and the contents of the answer character-string buffer 117.

The user touches a REPLY button 251. The control portion 80 outputs a control signal to the storage means 86 that in turn stores the received mail sender "yosioXXXX---" in a receiver address area 1143 and the received mail addressee "yuukoXXXX---" in a sender address area 1142 of the RAM 11. It stores the subject (title) "Planning Meeting" with a reply mark "Re" prefixed thereto (i.e., "Re: Planning Meeting") in a sending-mail-title area 1141 and the contents of a reply contents memory 118 in a sending-mail-contents area 1145.

The control portion 80 outputs a control signal to the display means 84 to display a mail transmitting screen 26 of Fig. 9 according to the memory contents of the sending mail storage portion 114.

The user touches a TRANSMIT button 261 on the screen, thereby a mail transmitting means 82 performs the mail sending processing according to the sending mail data stored in the sending mail storage portion 114 of the RAM 11.

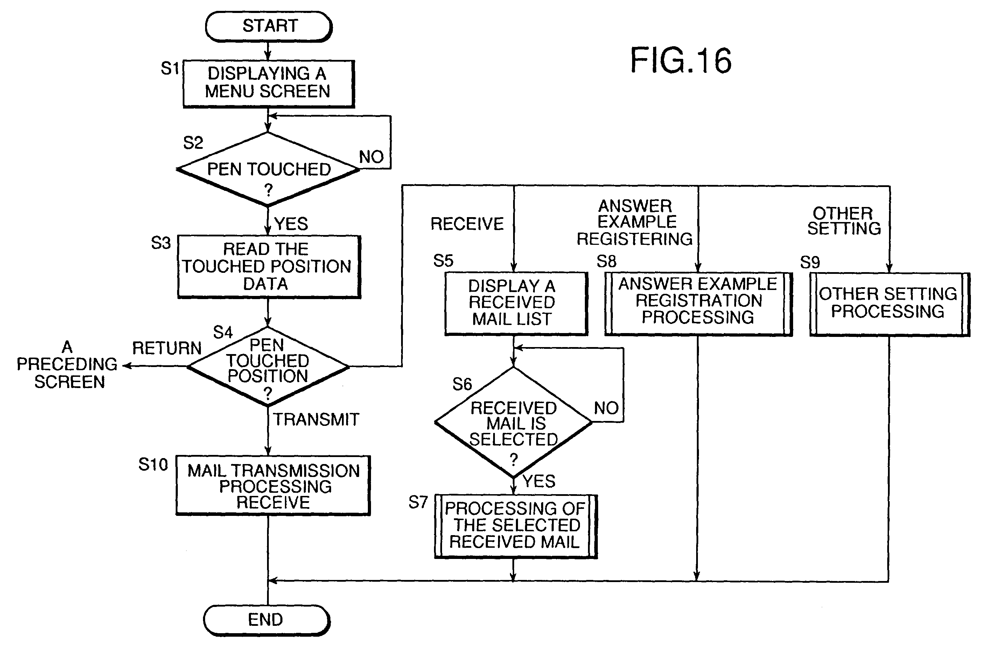

Referring now to flow charts of Figures 16 to 19, the processing procedure performed by the system according the embodiment of the present invention will be described below.

Fig. 16 is a flow chart depicting the processing on a menu screen of the electronic mail application.

When the electronic mail application is executed, a menu screen of the electronic mail application is displayed (Step S1) and the system waits until the user touches an input/output portion 2 by using a pen (Step S2).

With a pen-touch applied to a specified area of the input/output portion 2, the control portion 80 reads the touched position data (Step S3) and determines the position touched with the pen (Step S4).

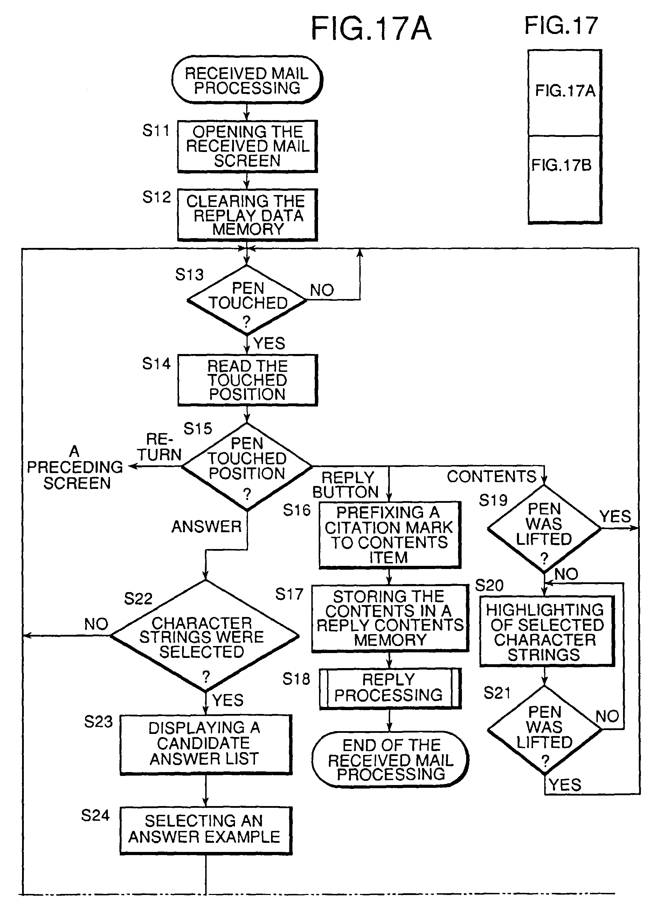

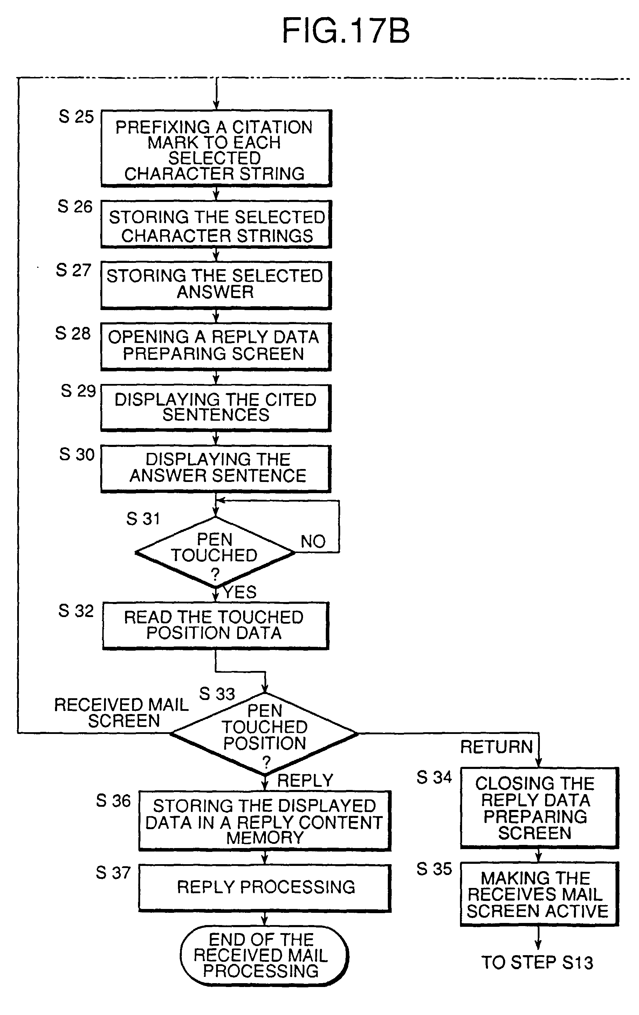

When a RETURN button 20 is found at the touched position, the current screen is replaced by a preceding screen displayed just before the current image. When a RECEIVE button 17 is detected at the touched position, the procedure advances to Step S5 to display a received-mail list and remains in a state waiting for selection of a received letter by the user on the screen (Step S6). When a desired received mail was selected by the user, the received-mail processing of the selected mail is conducted and finished (Step S7), which processing will be described later in detail with reference to Figs. 17A and 17B.

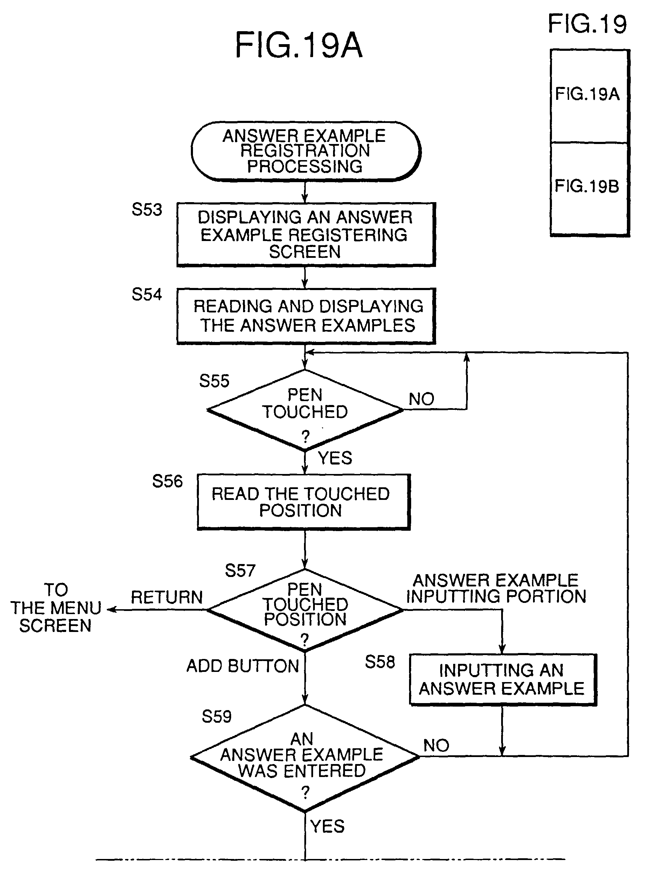

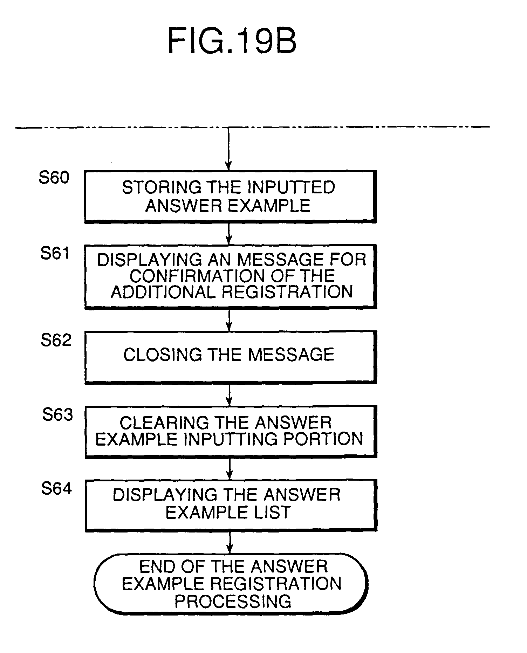

When an ANSWER EXAMPLE REGISTER button 18 is detected at the touched position, the procedure proceeds to Step S8 whereat the processing for registering an answer-example is conducted and finished, which processing will be described later in detail with reference to Figs. 19A and 19B.

When an OTHER SETTING button 19 is detected at the touched position, the procedure proceeds to Step S9 whereat the processing for setting designated kind of setting is conducted and finished.

When a TRANSMIT button 16 is detected at the touched position, the procedure proceeds to Step S10 whereat the mail-transmission processing is conducted and finished.

Referring to flowcharts of Figs. 17A and 17B, the procedure for preparing a reply using the received mail will be described below.

A received letter selected by the user is read from the received mail storage portion 113 of the RAM 11 and a received mail screen (Fig. 6) is opened (Step S11). A reply contents memory 118 of the RAM 11 is cleared (Step S12) and the system waits until the user touches with a pen a specified area of the input/output portion 2 (Step S13).

With a pen-touch applied to a specified area of the input/output portion 2, the control portion 80 reads the touched position data (Step S14) and decides the position touched with the pen (Step S15).

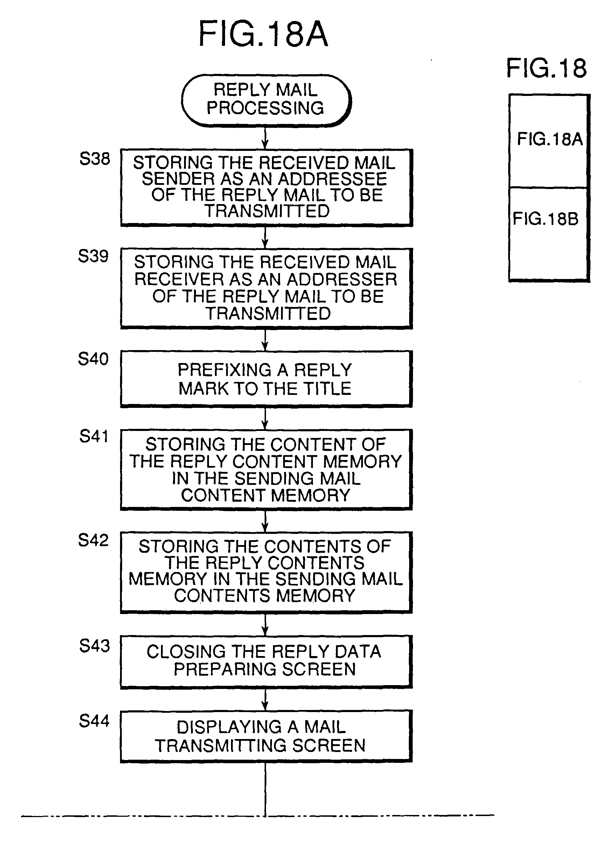

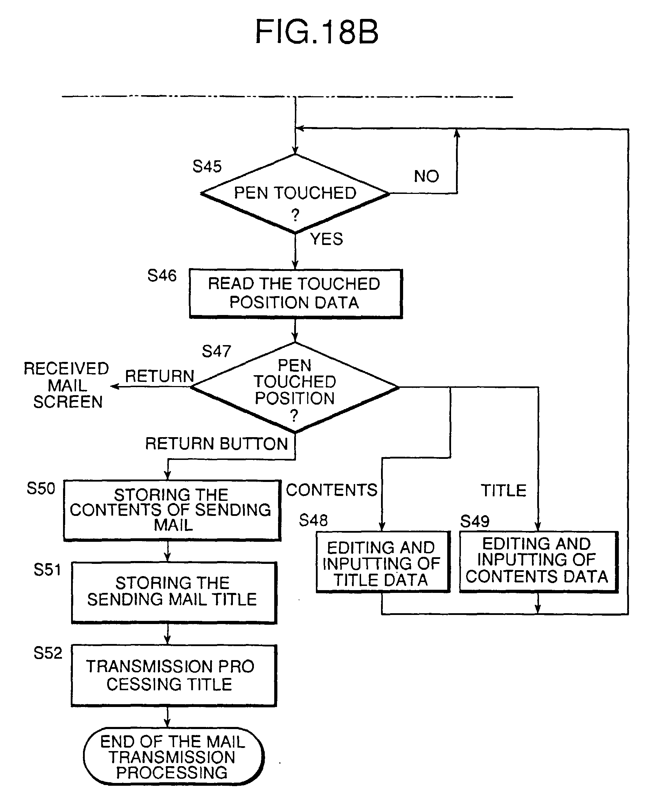

When a RETURN button 22 is detected at the touched position, the current screen is replaced by a preceding screen displayed just before the current image. When a REPLY button 21 is detected at the touched position, the procedure advances to Step S16 to put a citation mark ">" to every item of the received mail and stores the items prefixed with a citation mark in a reply contents memory 118 of the RAM 11 (Step S17). The reply processing is then conducted and finished (Step S18), which processing will be described later in detail with reference to Figs. 18A and 18B.

When a contents part of the received-mail is found at the touched position (Step S15), the procedure proceeds to Step S19 to examine whether the pen is lifted up. If so, the procedure returns to Step S13. If not, the selected character strings are highlighted on the screen (Step S20). At Step S21, it is examined again whether the pen removed up. The Steps 20 and 21 are repeated until the pen is lifted up. The procedure returns to Step S13 after detection of the pen lifted-up.

When an ANSWER button 23 is detected at the touched position (Step S15), the procedure proceeds to Step S22 to examine whether the character strings are selected. If not, the procedure returns to Step S13. When the character strings are selected as shown in Fig. 6, the ANSWER button 23 is highlighted and a list of candidate answers list 24 is indicated near the selected character strings as shown in Fig. 7 (Step S23).

When a desired answer example was selected from the list 24 (Step S24), the selected character strings are given a citation mark (Step S25) and stored in a citation character-string buffer 116 and the selected answer is stored in an answer character-string buffer 117 (Step S27). A reply data preparing screen 25 as shown in Fig. 8 is then opened on the received-mail screen (Step S28) and the character strings stored in the buffer 116 are displayed as cited sentences on the screen 25 (Step S29) and the character string stored in the buffer 117 is also displayed as an answer thereon (Step S30). The procedure is held in waiting state until a new touch of the pen is applied to the input/output portion 2 (Step S31).

With a pen-touch applied to a specified area of the input/output portion 2, touched position data is read (Step S32) and the touched position is determined (Step S33).

When the received-mail screen was touched with the pen, the procedure returns to Step S13. When a RETURN button 252 was found at the touched position, the procedure proceeds to Step S34 to close the reply data preparing screen 25 and make active the received mail screen (Step S35). The procedure then returns to Step S13.

When a REPLY button 251 was detected at the touched position, the procedure proceeds to Step S36 to store the contents of the reply data preparing screen 25 in the reply contents memory 118 of the RAM 11. The reply processing is conducted (Step S37) and the procedure ends.

Referring to flowcharts of Figs. 18A and 18B, the reply processing (at Step S18 and Step S37) will be described below.

A received-mail sender "yosioXXXX---" is stored in a receiver address area 1143 of the RAM 11 (Step S38) and the received mail addressee "yuukoXXXX---" is stored in a sender address area 1142 of the RAM 11 (Step S39). A reply-mark "Re:" is prefixed to the received mail subject (title) "Planning Meeting" (Step S40). The subject "Re: Planning Meeting" is stored in a sending-mail-title area 1141 (Step S41) and a contents of a reply contents memory 118 is stored in a sending-mail-contents area 1145 of the RAM 11 (Step S42), then the reply data preparing screen 25 is closed (Step S43). A mail sending screen 26 as shown in Fig. 9 is displayed according to the memory contents of the sending-mail-contents storage portion 114 (Step S44).

The procedure is held in the waiting state until a new touch of the pen is applied to the input/output portion 2 (Step S45).

With a pen-touch applied to a specified area of the input/output portion 2, the touched position data is read (Step S46) and the touched position is determined (Step S47).

When the contents part of the screen was touched with the pen, the procedure proceeds to Step S48 whereat the contents is input and edited. Then, the procedure returns to Step S45.

When a TRANSMIT button 261 was found at the touched position, the procedure proceeds to Step S50 whereat the displayed contents data is restored in the sending-mail-contents area 1145 of the RAM 11 and the title data is stored in a sending-mail-title area 1141 of the RAM 11 (Step S51). The mail-transmission processing is then conducted according to the contents data stored in the sending-mail storage portion 114 (Step 552) and the procedure ends.

Referring now to flowcharts of Figs. 19A and 19B, the answer-example registering procedure (the processing at Step S8 of Fig. 16) will be described in detail as follows:

The user touches a REGISTER button 18 on the electronic-mail-application menu screen, thereby an answer-example registering screen is displayed on the display portion of the device (Step S15). Candidate answer-examples are read from a candidate answer memory 115 of the RAM 11 and displayed in form of an answer example list 27 as shown in Fig. 12. The device then remains in the waiting state until the user touches with a pen a desired area of the input/output portion 2 of the device. With a pen-touch applied to a specified area of the input/output portion 2, the touched position data is read (Step S56) and the touched position is determined (Step S57).

When the answer-example inputting portion 28 on the screen was touched with the pen, the procedure advances to Step S58 to enter an answer example "I cannot attend". The procedure then returns to Step S55.

When a RETURN button 30 is detected at the touched position, the current screen is replaced by the menu screen of Fig. 5.

When an ADD button 29 is detected at the touched position, the procedure advances to Step S59 to judge whether an answer example is input by the user.

If no example is input, the procedure returns to Step S55. The answer example input by the user is additionally stored in the candidate-answer memory 115 of the RAM 11 (Step S60) and a confirmation message 31 <the answer "I cannot attend" was added to the answer-example list> is indicated on the answer-example registering screen (Step S61). Then, the message is closed (Step S62) and the indication of the answer-example inputting portion 28 is cleared (Step S63). All candidate answers including the newly added example "I cannot attend" are read from the candidate answer memory 115 of the RAM 11 and displayed as a candidate answer list 27 on the display screen (Step S64) whereat the answer-example registering processing ends.

The reply-mail preparation processing as described above is realized by a reply-mail preparation program that can be supplied as recorded on a separate recording medium for use in a device.

The advantages of the present invention are as follows.

According to the present invention, it is possible to provide an information processing device that enables a user to prepare a reply to a received letter merely by selecting items necessary to be cited in the reply from the received letter and then selecting suitable answers among examples previously stored in the device. The replay mail is then automatically prepared by coupling the cited items requiring answers with suitable answers (selected examples). This eliminates the necessity of entering reply sentences by entering character data through a keyboard or with a write-pen. Thus, the device assures easy and prompt preparation of replay mail only by using a pointing pen. This feature is particularly effective for portable type information terminals or telephone terminals, which display has a small area of display. In addition, this reply method can be applied to messages transmitted from any kinds of electronic mail system since it does not require sender sides to make any particular processing of the sending mail.

Furthermore, this information processing method allows users to additionally register newly prepared answer-examples in the device memory, thus increasing the flexibility of making an answer to received mail (by increasing the options of answer-examples). In other words, this makes it possible for every user to correctly express own will in the reply mail to the received mail.

## Claims

1. An information processing device for transmitting and receiving electronic mail over a transmission line, comprising:
a memory means (115) for storing answer examples for a reply mail;
a contents selecting means for presenting a contents of received mail and picking therefrom contents necessary for preparing a reply to the received mail;
an answer message selecting means for selecting any of the answer examples stored by the memory means (115); and
a reply-mail preparing means for preparing a reply mail by coupling the contents selected by the contents selecting means with answer examples selected by the answer example selecting means.

2. An information processing device as defined in claim 1, characterized in that it is further provided with a reply mail setting means for setting a sender of the received mail as an addressee of the reply mail and a receiver of the received mail as an addresser of the reply mail.

3. An information processing device as defined in any of claims 1 and 2, characterized in that it is further provided with a reply example preparing means for generating any kinds of answer examples and an answer example adding means for additionally storing the answer examples prepared by the reply example preparing means into the memory means (115).

4. A storage medium carrying a program readable by a computer, which program causes the computer to execute steps of:
storing necessary contents picked from received mail into a reply contents storage means (117);
presenting candidate answer examples previously stored in a candidate answer storage means (115);
storing any one selected from the presented candidate answers into an answer storage means (116); and
preparing reply mail by coupling the contents stored in the reply contents storage means (117) with the answer examples stored in the answer storage means (116) and storing the prepared reply mail in a reply mail storage means (118).

5. A storage medium carrying a program readable by a computer, which program causes the computer to execute steps of:
storing necessary contents picked from received mail into a reply contents storage means (117);
presenting candidate answer examples previously stored in a candidate answer storage means (115);
storing any one selected from the presented candidate answers into an answer storage means (116);
preparing reply mail by coupling the contents stored in the reply contents storage means (117) with a contents stored in the answer storage means (116) and storing the prepared reply mail in a reply mail storage means (118); and
setting a sender of the received mail as an addressee of the reply mail and a receiver of the received mail as an addresser of the reply mail.
